# FASCICULE DE BREVET EUROPEEN

(11) **EP 0 673 500 B1**
(45) Date de publication et mention de la délivrance du brevet: **01.10.1997**
(21) Numéro de dépôt: 94901986.3
(22) Date de dépôt: 06.12.1993
(51) Int. Cl.: G01B 9/02, G02B 6/12

(54) **DISPOSITIF DE MESURE INTERFEROMETRIQUE**
INTERFEROMETRISCHE MESSVORRICHTUNG
INTERFEROMETRIC MEASUREMENT DEVICE

(30) Priorité: 10.12.1992 FR 9215002
(43) Date de publication de la demande: 27.09.1995
(73) Titulaire: MERLIN GERIN, F-38240 Meylan (FR)
(72) Inventeur: KEVORKIAN, Antoine, F-38000 Grenoble (FR); DUPORT-SCHANEN, Isabelle, F-38700 La Tronche (FR); BENECH, Pierre, F-38000 Grenoble (FR)
(74) Mandataire: Jouvray, Marie-Andrée
(86) Numéro de dépôt international: FR9301194
(87) Numéro de publication internationale: WO9414028

(56) Documents cités:
- EP-A- 0 286 528
- WO-A-90/11484
- WO-A-92/20990
- CA-A- 1 108 903
- IEE PROCEEDINGS-J vol. 137, no. 6 , December 1990 , STEVENAGE, HERTS., GB pages 347 - 356 M.N. ARMENISE ET AL 'design and simulation of an on-board lithium niobiate integrated optical preprocessor'

## Description

La présente invention concerne un dispositif de mesure interférométrique comportant deux guides d'ondes ménagés dans un bloc rigide et réalisés selon une technologie d'optique intégrée pour constituer deux voies optiques d'amenée distinctes pour des signaux d'entrée mutuellement cohérents, des moyens pour faire interférer ces signaux et des moyens pour analyser les franges d'interférence obtenues.

Pour effectuer des mesures interférométriques des variations de chemin optique dues aux variations d'un paramètre physique variable, et pour déterminer le sens dans lequel s'effectuent ces variations, il est nécessaire, avec les appareils connus, de disposer de deux équipements identiques permettant chacun d'obtenir des franges d'interférence de signaux issus de deux voies optiques distinctes, mais dont l'une est en outre équipée d'un déphaseur, tel que par exemple une lame quart d'onde.

Le document EP-A-286.528, par exemple, utilise deux faisceaux de référence déphasés interférant chacun avec une partie d'un faisceau de mesure de manière à former deux signaux d'interférence dont les variations dans le temps sont représentatives du déplacement d'un mobile et du sens de ce déplacement. Dans le document WO-A-9011.484, des signaux analogues sont obtenus à partir de la comparaison à un signal de référence de deux signaux de mesure correspondant à deux directions de polarisation différentes.

Le fait de devoir utiliser deux équipements peut induire des erreurs dans les mesures et complique bien entendu les manipulations.

En particulier lorsque le montage expérimental est fait avec des composants discrets en optique classique, une procédure d'alignement et de réglage complexe doit être mise en oeuvre.

La présente invention se propose de pallier ces inconvénients en réalisant un dispositif de mesure interférométrique précis, fiable, de construction simple et économique et dont l'utilisation est considérablement plus facile que celle des dispositifs connus.

Dans ce but, le dispositif selon l'invention est caractérisé en ce qu'il comporte un organe élargisseur de faisceau interposé sur chaque voie optique de manière à générer des faisceaux plats étalés, les organes élargisseurs des deux voies étant identiques et disposés de manière à ce que les faisceaux plats étalés aient des fronts d'onde sensiblement plans formant entre eux un angle prédéterminé présentant un axe de symétrie, lesdits fronts d'onde créant une figure d'interférence spatiale dans une zone d'interférence, les moyens d'analyse comportant des moyens de détection disposés dans la zone d'interférence perpendiculairement audit axe de symétrie.

L'angle est de préférence de l'ordre du degré.

Selon une forme de réalisation particulièrement avantageuse, les organes élargisseurs de faisceaux comportent au moins une lentille planaire réalisée selon une technologie d'optique intégrée dans ledit bloc rigide.

Selon une variante les organes élargisseurs de faisceaux peuvent comporter des élargisseurs adiabatiques.

Selon un mode de réalisation préférentiel, les moyens d'analyse des franges peuvent comporter un dispositif de détection comportant au moins un détecteur étendu dont la longueur correspond sensiblement à une demi-frange de la figure d'interférence.

D'autres caractéristiques et les avantages qui en découlent ressortiront plus clairement de la description suivante d'un mode de réalisation donné à titre d'exemple non limitatif et représenté par les dessins annexés dans lesqueis:

La figure 1 représente une vue schématique illustrant le principe de fonctionnement du dispositif selon l'invention.

La figure 2 représente une forme de réalisation avantageuse du dispositif de l'invention.

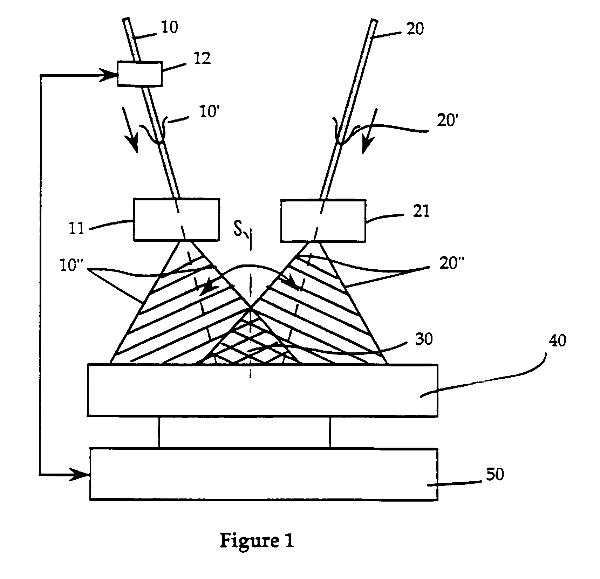

La figure 1 est une vue schématique qui illustre le principe du dispositif de mesure interférométrique selon l'invention. Deux guides optiques 10 et 20 véhiculent des signaux d'entrée mutuellement cohérents. Sur chacun de ces guides qui déterminent deux voies optiques, est placé un organe élargisseur de faisceau 11, respectivement 21, qui a pour fonction d'étendre le profil spatial de chaque voie optique. En amont des organes élargisseurs, les fronts d'onde 10', 20' sont dits "confinés", et en aval les fronts d'onde 10", 20" sont dits "larges". Les faisceaux obtenus en sortie des élargisseurs présentent un front d'onde sensiblement plan. Les organes élargisseurs 11, 21 sont identiques et disposés spatialement de manière à ce que les fronts d'onde plans obtenus forment entre eux un angle prédéterminé, non nul, définissant un axe de symétrie. Les fronts d'onde plans issus des deux organes élargisseurs forment ainsi, dans une zone d'interférence 30, une figure d'interférence spatiale. La figure d'interférence spatiale comporte des franges d'interférence sinusoïdales, régulières, perpendiculairement à l'axe de symétrie de l'angle précité. L'écartement spatial des franges, c'est à dire la période de la figure d'interférence, est défini par la longueur d'onde des signaux d'entrée et par l'angle que font entre eux les fronts d'onde des faisceaux élargis. Une variation du déphasage entre les signaux d'entrée, liée à une variation d'un paramètre physique à mesurer, provoque un décalage, perpendiculairement à l'axe de symétrie précité, de toute la figure d'interférence.

En orientant les guides de manière appropriée, notamment en introduisant un angle calibré entre les guides optiques, on crée la zone d'interférence 30 due à la superposition des ondes en aval des organes élargisseurs de faisceaux. C'est dans cette zone que l'on peut effectuer des mesures interférométriques au moyen d'équipements de mesure 40 appropriés. Les résultats de ces mesures peuvent ensuite être transmis à une unité 50 de traitement, de calcul, éventuellement d'affichage. en vue de leur interprétation qui consiste à déduire des informations sur le paramètre physique influençant le cheminement des signaux sur au moins une desdites voies optiques.

Si l'on désire faire de la détection synchrone, un dispositif de déphasage variable 12 peut être placé sur au moins une des voies optiques, soit dans la partie confinée soit dans la partie large. Le déphasage induit par ce dispositif peut être dû à une variation d'indice par effet thermique, ou par effet électro-optique ou par tout autre paramètre physique variable. Le cas échéant, l'unité 50 peut être couplée à la source de déphasage 12 en vue d'un contrôle de cette dernière.

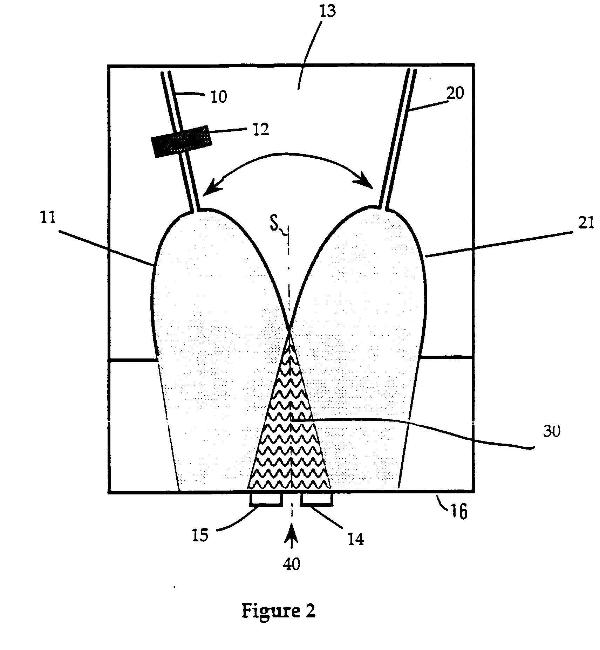

La figure 2 illustre un dispositif de mesure interférométrique basé sur le principe décrit ci-dessus et réalisé selon une technique d'optique intégrée. Le dispositif est principalement constitué d'un bloc 13 qui peut être constitué par un substrat en verre dopé, par exemple, par traitement sélectif au moyen de bains de nitrate de potassium ou d'argent ou de sulfate de thallium ou par un substrat en silice dopée déposée sur un support en silicium.

Sur ce bloc 13 sont préparés, au moyen de masques appropriés et par des techniques de gravure bien maîtrisées dans le domaine de la photolithographie, les deux guides d'ondes 10 et 20, ainsi que les organes élargisseurs de faisceaux 11 et 21. Ces organes sont de préférence des lentilles planaires, ou tout autre dispositif permettant d'obtenir des fronts d'ondes sensiblement plans, tels que par exemple des élargisseurs progressifs ou adiabatiques (tapers). A titre indicatif, la largeur des voies optiques dans la partie confinée est de l'ordre de 6 à 8 µm et leur dimension transversale dans la partie large est sensiblement comprise entre 1/10e mm et 1 mm. Comme représenté sur la figure, les élargisseurs 11 et 21 sont identiques et forment entre eux un angle, de manière à ce que les fronts plans forment entre eux un angle prédéterminé. La zone commune aux deux faisceaux plats constitue la zone d'interférence 30 dans laquelle est formée la figure d'interférence spatiale.

Les franges d'interférence formées sont sinusoïdales, régulières, perpendiculaires à l'axe de symétrie des fronts plats qui, sur les figures, correspond à l'axe de symétrie S de l'ensemble constitué par les élargisseurs 11 et 21.

L'écartement spatial des franges est défini par la longueur d'onde des signaux d'entrée et par l'angle que font entre eux les fronts d'onde des faisceaux élargis. Contrairement à ce qui se produit avec des guides d'ondes constitués par des fibres optiques individuelles dont le positionnement est souvent peu précis, les guides réalisés selon une technologie d'optique intégrée sont parfaitement fixes et l'angle précité est extrêmement précis. En effet, le positionnement des guides est défini par la géométrie du masque qui a servi à les réaliser. Pour un angle très petit, les franges d'interférence sont très écartées et pour un angle plus grand, les franges sont plus serrées. A titre d'exemple non limitatif, l'angle entre les fronts d'onde peut être de l'ordre de 1 ou 1,5°.

Sur la face de sortie 16 du bloc, et dans la zone d'interférence 30, sont fixés un ou plusieurs détecteurs. Les détecteurs, qui permettent d'observer différents points du plan d'interférence ou différents segments dans le cas de détecteurs étalés sont disposés perpendiculairement à l'axe de symétrie des fronts plans. La régularité de la figure d'interférence dans toute la zone d'interférence 30, tant parallèlement à l'axe de symétrie que le long de cet axe, permet d'utiliser des détecteurs dont la position exacte n'est pas significative. Seule la distance entre les photodétecteurs est importante, car c'est elle qui, avec l'angle précité, détermine le déphasage.

Sur la figure 2, on a représenté un mode de réalisation particulier avec deux détecteurs 14 et 15. Les détecteurs 14 et 15 sont disposés à une distance prédéterminée l'un de l'autre, mais cette distance fixe peut être quelconque. Selon un mode de réalisation préférentiel, les détecteurs 14 et 15 sont constitués de deux photodiodes dont la longueur correspond à une demi-frange et espacées d'un quart de frange à un nombre entier de franges près pour obtenir deux signaux électroniques en quadrature de phase. L'utilisation de détecteurs non ponctuels peut permettre d'augmenter l'amplitude des signaux détectés et, par conséquent, la précision de la mesure.

Les détecteurs sont, par exemple, collés ou rapportés par tout moyen approprié sur la tranche 16 du bloc 13. Selon une variante de réalisation, il est possible de déporter la figure d'interférence et de disposer les détecteurs à distance.

Le dispositif de détection peut également être constitué par un ensemble de détecteurs ponctuels constituant un dispositif multidétection, par exemple par une barrette CCD, de manière à saisir de manière détaillée l'ensemble de la figure d'interférence.

Le dispositif de détection peut, dans certains cas, comporter un seul élément détecteur. Dans le cas où il comporte plusieurs éléments détecteurs, ceux-ci fournissent des signaux électroniques présentant un déphasage déterminé, qui est de préférence égal à π / 2.

## Revendications

1. Dispositif de mesure interférométrique comportant deux guides d'ondes (10, 20) ménagés dans un bloc rigide (13) et réalisés selon une technologie d'optique intégrée pour constituer deux voies optiques d'amenée distinctes pour des signaux d'entrée mutuellement cohérents, des moyens pour faire interférer ces signaux et produire des franges d'interférence, et des moyens d'analyse (40, 50) pour analyser lesdites franges d'interférence, dispositif caractérisé en ce qu'il comporte un organe (11, 21) élargisseur de faisceau interposé sur chaque voie optique de manière à générer des faisceaux plats étalés (10", 20"), les organes élargisseurs des deux voies étant identiques et disposés de manière à ce que les faisceaux plats étalés aient des fronts d'onde sensiblement plans formant entre eux un angle prédéterminé présentant un axe de symétrie, lesdits fronts d'onde créant une figure d'interférence spatiale dans une zone d'interférence (30), les moyens d'analyse comportant des moyens de détection disposés dans la zone d'inteférence perpendiculairement audit axe de symétrie.

2. Dispositif de mesure interferométrique selon la revendication 1, caractérisé en ce que ledit angle est de l'ordre du degré.

3. Dispositif de mesure interférométrique selon l'une des revendications 1 et 2, caractérisé en ce que les organes (11, 21) élargisseurs de faisceaux comportent au moins une lentille planaire réalisée selon une technologie d'optique intégrée dans ledit bloc rigide.

4. Dispositif de mesure interférométrique selon l'une des revendication 1 et 2. caractérisé en ce que les organes (11, 21) élargisseurs de faisceaux comportent au moins un élargisseur adiabatique.

5. Dispositif de mesure interférométrique selon l'une quelconque des revendications 1 à 4, caractérisé en ce que les moyens d'analyse des franges comportent au moins un dispositif de détection (40) comportant au moins un détecteur dont la longueur correspond sensiblement à une demi-frange de la figure d'interférence.

6. Dispositif de mesure interférométrique selon la revendication 5, caractérisé en ce que le dispositif de détection (40) comporte au moins deux détecteurs étendus décalés d'un quart de frange, à un nombre entier de frange près.

7. Dispositif de mesure interférométrique selon l'une quelconque des revendications 1 à 4, caractérisé en ce que les moyens d'analyse des franges comportent un dispositif de détection fournissant au moins deux signaux électroniques présentant un déphasage prédéterminé.

8. Dispositif de mesure interférométrique selon la revendication 7, caractérisé en ce que le dispositif de détection fournit deux signaux électroniques en quadrature de phase.

9. Dispositif de mesure interférométrique selon l'une quelconque des revendications 1 à 8, caractérisé en ce que les moyens d'analyse comportent des détecteurs (15, 25) fixés le long d'une face de sortie (16) du bloc rigide (13) portant les guides d'ondes.

10. Dispositif de mesure interférométrique selon la revendication 9, caractérisé en ce que ies détecteurs sont constitues par une pluralité d'éléments détecteurs ponctuels ae manière à saisir l'ensemble de la figure d'interférence.

## Patentansprüche

1. Interferometer-Meßanordnung mit zwei, in einen biegesteifen Block (13) eingebrachten und in integrierter Optik ausgeführten Wellenleitern (10, 20) zur Bildung von zwei getrennten Zuführungs-Lichtleiterbahnen für wechselseitig kohärente Eingangssignale, Mitteln, um diese Signale zur Interferenz zu bringen und Interferenzstreifen zu erzeugen, sowie Analysemitteln (40, 50) zur Analyse der genannten Interferenzstreifen, dadurch gekennzeichnet, daß die Anordnung eine, in jede Lichtleiterbahn eingesetzte Strahlverbreiterungseinrichtung (11, 21) zur Erzeugung gespreizter Flachstrahlen (10", 20") umfaßt, wobei die Strahlverbreiterungseinrichtungen der beiden Bahnen identisch und so angeordnet sind, daß die gespreizten Flachstrahlen annähernd ebene Wellenfronten aufweisen, die in einem bestimmten Winkel mit einer Symmetrieachse zueinander stehen, die genannten Wellenfronten in einem Interferenzbereich (30) eine räumliche Interferenzfigur erzeugen und die Analysemittel Detektormittel umfassen, die im Interferenzbereich senkrecht zur genannten Symmetrieachse angeordnet sind.

2. Interferometer-Meßanordnung nach Anspruch 1, dadurch gekennzeichnet, daß der genannte Winkel etwa 1 Grad beträgt.

3. Interferometer-Meßanordnung nach einem der Ansprüche 1 und 2, dadurch gekennzeichnet, daß die Strahlverbreiterungseinrichtungen (11, 21) mindestens eine, in den genannten biegesteifen Block in integrierter Optik eingebrachte Planarlinse umfassen.

4. Interferometer-Meßanordnung nach einem der Ansprüche 1 und 2, dadurch gekennzeichnet, daß die Strahlverbreiterungseinrichtungen (11, 21) mindestens eine adiabatische Verbreiterungseinrichtung umfassen.

5. Interferometer-Meßanordnung nach irgendeinem der Ansprüche 1 bis 4, dadurch gekennzeichnet, daß die Analysemittel zur Analyse der Interferenzstreifen mindestens eine Detektoreinrichtung (40) umfassen, welche mindestens einen Detektor aufweist, dessen Länge annähernd einem Halb streifen der Interferenzfigur entspricht.

6. Interferometer-Meßanordnung nach Anspruch 5, dadurch gekennzeichnet, daß die Detektoreinrichtung (40) mindestens zwei Breitdetektoren umfaßt, die in einem Abstand von l/4 + nl versetzt zueinander angeordnet sind, wobei l die Streifenbreite und n eine ganze Zahl darstellt.

7. Interferometer-Meßanordnung nach irgendeinem der Ansprüche 1 bis 4, dadurch gekennzeichnet, daß die Analysemittel zur Analyse der Interferenzstreifen eine Detektoreinrichtung umfassen, die mindestens zwei elektronische Signale mit einer bestimmten Phasenverschiebung zueinander liefert.

8. Interferometer-Meßanordnung nach Anspruch 7, dadurch gekennzeichnet, daß die Detektoreinrichtung zwei, um 90 Grad zueinander phasenverschobene elektronische Signale liefert.

9. Interferometer-Meßanordnung nach irgendeinem der Ansprüche 1 bis 8, dadurch gekennzeichnet, daß die Analysemittel Detektoren (15, 25) umfassen, die entlang einer Außenseite (16) des die Wellenleiter tragenden, biegesteifen Blocks (13) befestigt sind.

10. Interferometer-Meßanordnung nach Anspruch 9, dadurch gekennzeichnet, daß die Detektoren durch mehrere Punktdetekorelemente gebildet werden so daß die gesamte Interferenzfigur erfaßt wird.

## Claims

1. An interferometric measuring device comprising two wave guides (10, 20) arranged in a rigid block (13) and achieved according to an integrated optics technology to constitute two distinct optic transmission channels for mutually coherent input signals, means of making these signals interfere and produce interference fringes, and analyzing means (40, 50) for analyzing said interference fringes, a device characterized in that it comprises a beam broadening device (11, 21) interposed on each optic channel so as to generate spread flat beams (10", 20"), the broadening devices of the two channels being identical and disposed in such a way that the spread flat beams have appreciably flat wave fronts forming between them a preset angle presenting an axis of symmetry, said wave fronts creating a spatial interference figure in an interference zone (30), the analysis means comprising detection means disposed in the interference zone perpendicularly to said axis of symmetry.

2. The interferometric measuring device according to claim 1, characterized in that said angle is about one degree.

3. The interferometric measuring device according to one of the claims 1 and 2, characterized in that the beam broadening devices (11, 21) comprise at least one planar lens achieved according to an optic technology integrated into said rigid block.

4. The interferometric measuring device according to one of the claims 1 and 2, characterized in that the beam broadening devices (11, 21) comprise at least one taper.

5. The interferometric measuring device according to any one of the claims 1 to 4, characterized in that the means for analyzing the fringes comprise at least one detection device (40) comprising at least one detector whose length corresponds appreciably to a half-fringe of the interference figure.

6. The interferometric measuring device according to claim 5, characterized in that the detection device (40) comprises at least two extended detectors with a spacing of l/4 + nl wherein I is the fringe width and n an integer.

7. The interferometric measuring device according to any one of the claims 1 to 4, characterized in that the means for analyzing the fringes comprise a detection device supplying at least two electronic signals presenting a preset phase difference.

8. The interferometric measuring device according to claim 7, characterized in that the detection device supplies two electronic signals in phase quadrature.

9. The interferometric measuring device according to any one of the claims 1 to 8, characterized in that the analyzing means comprise detectors (15, 25) fixed along an output face (16) of the rigid block (13) bearing the wave guides.

10. The interferometric measuring device according to claim 9, characterized in that the detectors are formed by a plurality of punctual detector elements so as to capture the whole of the interference figure.
